# EUROPÄISCHE PATENTSCHRIFT

(11) **EP 3 653 885 B1**
(45) Veröffentlichungstag und Bekanntmachung des Hinweises auf die Patenterteilung: **05.01.2022**
(21) Anmeldenummer: 19207557.0
(22) Anmeldetag: 06.11.2019
(51) Int. Cl.: F04D 19/04, F04D 27/00, F04D 29/58, G01K 13/024, G01K 13/02

(54) **VERFAHREN ZUM ERMITTELN EINER ZUSTANDSINFORMATION IN EINEM VAKUUMGERÄT**
METHOD FOR DETECTING STATUS INFORMATION IN A VACUUM DEVICE
PROCÉDÉ DE DÉTERMINATION D'UNE INFORMATION D'ÉTAT DANS UN APPAREIL SOUS VIDE

(43) Veröffentlichungstag der Anmeldung: 20.05.2020
(73) Patentinhaber: PFEIFFER VACUUM GMBH, 35614 Asslar (DE)
(72) Erfinder: Koch, Christian, 35580 Wetzlar (DE); Schweighöfer, Michael, 35641 Schöffengrund (DE)
(74) Vertreter: Manitz Finsterwald Patent- und Rechtsanwaltspartnerschaft mbB

(56) Entgegenhaltungen:
- EP-A1- 3 456 979
- EP-A1- 3 557 073
- JP-A- 2006 037 739
- US-A1- 2013 071 258
- US-A1- 2019 226 914

## Beschreibung

Die vorliegende Erfindung betrifft ein Verfahren zum Ermitteln einer Zustandsinformation in einem Vakuumgerät mit einer Gasstromeinheit, nämlich einem Ventil, zum Steuern und/oder Bereitstellen eines Gasstromes.

Die JP 2006 037739 A offenbart eine Turbomolekularpumpe mit einer Heizeinrichtung. Die EP 3 456 979 A1 offenbart ein Vakuumgerät und ein Verfahren zur Erzeugung einer Information betreffend den Betrieb eines Vakuumgerätes. Die US 2019/226914 A1 offenbart einen Temperatursensor für eine schnelldrehende Rotationsmaschine. Die EP 3 557 073 A1 offenbart eine Vakuumpumpe. Die US 2013/071258 A1 offenbart ein Verfahren der eingangs genannten Art, bei dem eine Temperatur eines Rotors einer Turbomolekularpumpe zu zwei verschiedenen Zeitpunkten gemessen wird.

Im Stand der Technik werden Vakuumgeräte, insbesondere Vakuumpumpen, beispielsweise mit Sperrgas beaufschlagt. Z.B. durch Verschmutzung oder aufgrund des Ausfalls eines Ventils kann es vorkommen, dass der gewünschte Gasstrom nicht mehr sichergestellt ist. Im Fall von Sperrgas kann dies zum vorzeitigen Ausfall der Pumpe führen. Auch ein Prozessgasstrom kann unerwünscht beeinträchtigt sein, z.B. sodass die Pumpenperformance verringert ist.

Es ist eine Aufgabe der Erfindung, ein Verfahren der eingangs genannten Art bereitzustellen, welches auf besonders einfache und zuverlässige Weise durchgeführt werden kann.

Diese Aufgabe wird durch ein Verfahren nach Anspruch 1 gelöst und insbesondere durch die Schritte: (a) Messen eines ersten Temperaturmesswertes im Bereich des Gasstromes mittels eines Temperatursensors in einem ersten Aktivitätszustand der Gasstromeinheit; (b) Versetzen der Gasstromeinheit in einen zweiten Aktivitätszustand, der einem geringeren oder einem höheren Gasstrom zugeordnet ist als der erste Aktivitätszustand; (c) Messen eines zweiten Temperaturmesswertes im Bereich des Gasstromes; (d) Ermitteln einer gemessenen Abweichung des zweiten Temperaturmesswertes von dem ersten Temperaturmesswert; (e) Vergleichen der gemessenen Abweichung mit einer erwarteten Abweichung; (f) Ermitteln der Zustandsinformation anhand des Vergleiches, wobei die Zustandsinformation eine Information über die Funktionsfähigkeit der Gasstromeinheit und/oder des Temperatursensors umfasst.

Erfindungsgemäß wird also der Aktivitätszustand der Gasstromeinheit verändert, wobei vorher und nachher, also vor der Änderung und nach der Änderung, jeweils eine Temperatur gemessen wird. Bei einwandfrei funktionierender Gasstromeinheit ist eine erwartete Abweichung der Temperatur im zweiten Aktivitätszustand gegenüber dem ersten Aktivitätszustand bekannt oder zumindest vorhersagbar, z.B. anhand weiterer Betriebsparameter und/oder Sensoren. Wenn sich die gemessene Abweichung, insbesondere erheblich (also z.B. außerhalb eines vorgegebenen oder vorgebbaren Toleranzbereiches liegend), von der erwarteten Abweichung unterscheidet, kann z.B. auf einen Funktionsfehler der Gasstromeinheit geschlossen werden. Umgekehrt kann bei, insbesondere ausreichender (also z.B. innerhalb eines vorgegebenen oder vorgebbaren Toleranzbereiches liegend), Übereinstimmung von gemessener und erwarteter Abweichung z.B. auf einen funktionsfähigen Zustand der Gasstromeinheit geschlossen werden.

Dabei wird ausgenutzt, dass eine Veränderung des Gasstromes im Allgemeinen eine Temperaturveränderung in dem betreffenden Bereich des Gasstromes hervorruft, insbesondere durch Konvektion. Insbesondere kann das Gas des Gasstromes im Allgemeinen eine geringere Temperatur als bestimmte Bauteile im Bereich des Gasstromes aufweisen. Die Gastemperatur kann beispielsweise als solche und/oder aufgrund einer Expansion niedrig sein. Wenn also z.B. bei einer Veränderung des Gasstromes keine oder nur eine geringe Temperaturabweichung auftritt, kann z.B. auf einen Funktionsfehler der Gasstromeinheit geschlossen werden.

Die Temperaturmesswerte werden mittels eines, insbesondere mittels desselben, Temperatursensors gemessen. Temperatursensoren sind auch in Vakuumgeräten des Standes der Technik häufig vorhanden, z.B. um eine Temperatur eines Rotors einer Vakuumpumpe zu überwachen. Gerade im Zusammenhang mit derartigen Konstruktionen, die ohnehin einen solchen Sensor umfassen, ermöglicht die Erfindung eine Diagnose der Gasstromeinheit und/oder des Temperatursensors auf besonders einfache Weise, nämlich insbesondere ohne zusätzliche Sensorik. Vielmehr wird an der Gasstromeinheit lediglich deren Aktivitätszustand verändert (durch einmaliges oder mehrfaches Hin- und Herschalten zwischen zwei verschiedenen Aktivitätszuständen), wobei aus den resultierenden Temperaturmesswerten auf die eine Information über eine Funktionsfähigkeit der tromeinheit und/oder des Temperatursensors umfassende Zustandsinformation geschlossen wird. Gleichwohl kann zur Implementierung der Erfindung auch ein gesonderter Temperatursensor eingesetzt werden. Außerdem kann generell auch eine Temperaturüberwachung von temperaturempfindlichen, insbesondere beweglichen, Bauteilen, wie etwa eines Rotors, implementiert sein, insbesondere mittels desselben Temperatursensors.

Generell kann eine erwartete Temperatur im zweiten Aktivitätszustand insbesondere höher als der erste Temperaturmesswert sein bzw. die erwartete Abweichung kann insbesondere nach höher gerichtet sein, dies insbesondere für den Fall, dass der Gasstrom eine kühlende Wirkung im Messbereich aufweist und/oder der zweite Aktivitätszustand einem geringeren Gasstrom zugeordnet ist als der erste Aktivitätszustand. Alternativ kann die erwartete Temperatur aber auch niedriger als der erste Temperaturmesswert sein.

Die erwartete Abweichung ist in einer Steuereinheit des Vakuumgerätes in Abhängigkeit von dem ersten Temperaturmesswert hinterlegt. Die erwartete Abweichung kann dabei vor dem Betrieb, insbesondere durch den Hersteller, z.B. experimentell und/oder rechnerisch ermittelt sein. Alternativ oder zusätzlich kann die erwartete Abweichung durch eine Steuereinheit des Vakuumgerätes rechnerisch ermittelt werden, beispielsweise durch eine Simulation und/oder in Abhängigkeit weiterer Parameter und/oder Sensordaten.

Der "Bereich des Gasstromes" ist generell als Einflussbereich des Gasstromes hinsichtlich Temperatur zu verstehen. Der Temperatursensor muss somit nicht - kann aber- unmittelbar im Gasstrom angeordnet sein oder z.B. eine Temperatur einer den Gasstrom unmittelbar begrenzenden Oberfläche messen. Vielmehr muss erfindungsgemäß lediglich eine gewisse Temperaturabweichung infolge der Änderung des Aktivitätszustandes detektierbar sein.

Bei einer Ausführungsform des Verfahrens umfasst die erwartete Abweichung einen Erwartungsbereich. Die erwartete Abweichung muss also insbesondere nicht lediglich einen Erwartungswert aufweisen. Als Erwartungsbereich ist auch eine Kombination aus Erwartungswert und angrenzendem Bereich zu verstehen, innerhalb dessen der Unterschied zwischen gemessener und erwarteter Abweichung als unerheblich angesehen wird. Generell kann der Erwartungsbereich insbesondere eine obere und/oder eine untere Grenze aufweisen. Der Erwartungsbereich kann also auch als Toleranzbereich bezeichnet werden.

Die Gasstromeinheit wird vorzugsweise für eine bestimmte Zeitdauer in den zweiten Aktivitätszustand versetzt. Insbesondere wird der zweite Temperaturmesswert zum Ende dieser bestimmten Zeitdauer gemessen und/oder gilt die erwartete Abweichung für die bestimmte Zeitdauer. Die Zeitdauer kann insbesondere klein sein, z.B. höchstens eine Minute, insbesondere höchstens 30 Sekunden, betragen.

Nach Ablauf der Zeitdauer kann die Gasstromeinheit insbesondere zurück in den ersten Aktivitätszustand versetzt werden. Falls eine Wiederholung des Ermittelns der Zustandsinformation vorgesehen ist, kann hiermit insbesondere für eine bestimmte Wartedauer gewartet werden, insbesondere sodass sich im ersten Aktivitätszustand wieder eine im Wesentlichen stationäre Temperatur einstellen kann.

Die Zustandsinformation umfasst erfindungsgemäß zumindest eine Information über eine Funktionsfähigkeit einer Funktionseinheit der Gasstromeinheit oder auch des Temperatursensors selbst.

Bei einer weitere Ausführungsform wird auf einen ordnungsgemäßen Zustand geschlossen, wenn die gemessene Abweichung mit der erwarteten Abweichung übereinstimmt, insbesondere innerhalb des Erwartungsbereichs liegt, und/oder wobei auf einen fehlerhaften Zustand geschlossen wird, wenn die gemessene Abweichung mit der erwarteten Abweichung nicht übereinstimmt, insbesondere außerhalb des Erwartungsbereichs liegt.

Es kann beispielsweise auch ein Übergangsbereich vorgesehen sein, der insbesondere weder einem ordnungsgemäßen noch einem fehlerhaften Zustand zugeordnet ist. Alternativ kann ein Übergangsbereich einem nicht ordnungsgemäßen Zustand zugeordnet sein. Z.B. wird dabei nur dann auf einen fehlerhaften Zustand geschlossen, wenn die Abweichung nicht nur außerhalb des Erwartungsbereichs, sondern auch außerhalb des Übergangsbereichs liegt. Es kann eine entsprechende Information festgehalten und/oder ausgegeben werden, wenn die gemessene Abweichung im Übergangsbereich liegt. Alternativ oder zusätzlich kann eine wiederholte Ermittlung der Zustandsinformation veranlasst werden.

Gemäß einer Weiterbildung ist der Temperatursensor entfernt, also räumlich versetzt, von der Gasstromeinheit angeordnet. Somit wird vorteilhaft ausgenutzt, dass der Gasstrom auch entfernt von der Gasstromeinheit temperierend, insbesondere kühlend, wirksam ist. Insbesondere der Zustand der Gasstromeinheit kann hierdurch auf besonders einfache Weise ermittelt werden. Alternativ kann der Temperatursensor beispielsweise an der Gasstromeinheit selbst angeordnet sein und/oder deren Temperatur messen.

Der Temperatursensor kann bevorzugt zum, insbesondere berührungslosen, Messen einer Oberflächentemperatur, insbesondere eines beweglichen Bauteils, ausgebildet sein. Die Oberflächentemperatur ändert sich besonders schnell infolge einer Veränderung des sie passierenden Gasstroms. Eine Temperaturabweichung kann somit besonders schnell detektiert werden und/oder der zweite Aktivitätszustand braucht nur für eine kurze Zeitdauer beibehalten zu werden. Der Temperatursensor kann beispielsweise als Infrarotsensor ausgebildet sein. Generell kann der Sensor insbesondere dazu ausgebildet sein, die Temperatur direkt zu messen.

Insbesondere kann der Temperatursensor zum Messen einer Temperatur eines im Bereich des Gasstromes angeordneten Bauteiles ausgebildet sein. Alternativ kann der Temperatursensor beispielsweise dazu ausgebildet sein, eine Temperatur des Gases selbst zu messen.

Bei dem Bauteil kann es sich insbesondere um ein bewegliches Bauteil, z.B. einen Pumpenrotor und/oder einen Motorläufer, handeln. Eine Bewegung des Bauteils begünstigt eine Wärmeübertragung zwischen Bauteil und Gasstrom zusätzlich, sodass besonders schnell eine Temperaturabweichung nach Aktivitätsänderung der Gasstromeinheit messbar ist.

Der Temperatursensor kann allgemein vorteilhaft an und/oder vor einer Verengung des Gasstromweges angeordnet sein und/oder dort die Temperatur messen. Durch die Verengung wird der Gasstrom beschleunigt und der konvektive Wärmeaustausch wird verstärkt. Dies führt ebenfalls zu einer besonders schnellen Erkennbarkeit einer Temperaturabweichung. Die Verengung kann beispielsweise eine Dichtung, insbesondere eine Labyrinthdichtung sein.

Gemäß der Erfindung ist die Gasstromeinheit als Ventil ausgebildet. Für das Ventil kann erfindungsgemäß eine besonders einfache Zustandsüberprüfung durchgeführt werden. Insbesondere muss kein Gasstromsensor eingesetzt werden. Stattdessen kann der Zustand bzw. die Funktionsfähigkeit einfach über den Temperatursensor ermittelt werden.

Die Gasstromeinheit kann gemäß einem vorteilhaften Beispiel als Sperrgasventil ausgebildet sein oder ein solches umfassen. Für das Sperrgasventil kann eine Zustandsinformation auf besonders einfache Weise ermittelt werden.

Der zweite Aktivitätszustand ist erfindungsgemäß einem geringeren oder einem höheren Gasstrom zugeordnet als der erste Aktivitätszustand. Insbesondere wird der Gasstrom im zweiten Aktivitätszustand gedrosselt oder gesperrt. Generell können die Aktivitätszustände stufenweise oder kontinuierlich einstellbar sein. Es können beispielsweise lediglich oder wenigstens zwei Aktivitätszustände vorgesehen sein, beispielsweise "an" und "aus", also maximaler Gasstrom und kein Gasstrom. Die Gasstromeinheit kann beispielsweise ein Schaltventil sein oder umfassen. Bei mehreren Stufen oder kontinuierlich einstellbarem Aktivitätszustand kann zwischen Ermittlungszyklen beispielsweise der zweite Aktivitätszustand variiert werden.

Bei einer Ausführungsform ist vorgesehen, dass der erste oder der zweite Aktivitätszustand einem ausgeschalteten und/oder gesperrten Zustand entspricht. Der jeweils andere Aktivitätszustand kann beispielsweise einem normalen Betriebszustand und/oder einem eingeschalteten Gasstrom, z.B. einer aktiven Sperrgasversorgung, entsprechen.

Die Zustandsinformation kann insbesondere wiederholt ermittelt werden. So kann das Ermitteln beispielsweise in bestimmten zeitlichen Abständen wiederholt werden, insbesondere mit den zuvor genannten Schritten. So kann auf einfache Weise eine im Wesentlichen dauerhafte Überwachung der Zustandsinformation gewährleistet werden. Die zeitlichen Abstände können beispielsweise vorgegeben sein oder anhand von Betriebsparametern und/oder Sensordaten ermittelt werden. Das Ermitteln der Zustandsinformation kann alternativ oder zusätzlich nach Erkennen eines nicht ordnungsgemäßen oder fehlerhaften Zustandes wiederholt werden, beispielsweise um den nicht ordnungsgemäßen Zustand näher zu untersuchen oder den fehlerhaften Zustand zu verifizieren. Werden Temperaturmesswerte außerhalb des Erwartungsbereichs und/oder ein fehlerhafter Zustand festgestellt, kann das Ermitteln z.B. in geeigneten kurzen Abständen wiederholt werden, um den Fehler sicher zu detektieren und den Einfluss anderer Faktoren auf eine ausbleibende Temperaturveränderung auszuschließen.

Der Gasstrom kann insbesondere ein Sperrgas, ein Prozessgas und/oder ein Temperierungsgas, wie etwa Luft, umfassen. Die Gasstromeinheit kann beispielsweise als ein Sperrgasventil oder ein Prozessgasventil, wie z.B. ein Einlass- oder ein Auslassventil des Vakuumgerätes, ausgebildet sein.

Erfindungsgemäß kann die Zustandsinformation die Gasstromeinheit betreffen. Z.B. können Verschmutzungen im Bereich der Gasstromeinheit und/oder eines Weges des Gasstromes den Gasstrom unerwünscht beeinträchtigen oder einschränken. Derartige Störungen können zuverlässig und auf einfache Weise durch das erfindungsgemäße Verfahren erkannt werden.

Die Zustandsinformation kann erfindungsgemäß auch den Temperatursensor betreffen. Auch dieser kann in der Praxis einer möglichen Verschmutzung oder anderweitigen Funktionsbeeinträchtigungen ausgesetzt sein. Wenn beispielsweise aber eine ordnungsgemäße Funktionsweise der Gasstromeinheit und/oder sichere Bereitstellung des Gasstromes bekannt sind oder angenommen werden können, kann ein Zustand des Temperatursensors überprüft werden. Z.B. für den Fall, dass der Temperatursensor einer Temperaturüberwachung des Rotors dient, kann somit auf einfache Weise die Betriebssicherheit erhöht werden, nämlich durch die zusätzliche Überprüfung der Funktionsfähigkeit bzw. des Zustandes des Temperatursensors.

Die Aufgabe der Erfindung wird ferner durch ein Vakuumgerät nach dem hierauf gerichteten Anspruch gelöst. Dieses Vakuumgerät umfasst eine Gasstromeinheit, nämlich ein Ventil, zum Steuern und/oder Bereitstellen eines Gasstromes, einen Temperatursensor zum Ermitteln einer Temperatur im Bereich des Gasstromes, eine Steuereinheit, mittels derer die Gasstromeinheit steuerbar ist und eine Temperatur mittels des Temperatursensors ermittelbar ist. Die Steuereinheit ist dazu eingerichtet, ein Verfahren nach vorstehend beschriebener Art durchzuführen.

Das Vakuumgerät kann beispielsweise eine Vakuumpumpe, insbesondere eine Turbomolekularpumpe und/oder einer Pumpe mit Rotortemperaturüberwachung, sein oder umfassen.

Das Vakuumgerät kann insbesondere einen Rotor aufweisen, der zum Erzeugen einer Pumpwirkung zu einer Rotation antreibbar ist. Der Temperatursensor kann insbesondere eine Oberflächentemperatur des Rotors berührungslos messen.

Die hierin beschriebenen Ausführungsformen und Einzelmerkmale eines Vakuumgerätes können, insbesondere sinngemäß, vorteilhaft der Weiterbildung des erfindungsgemäßen Verfahrens dienen und umgekehrt.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,

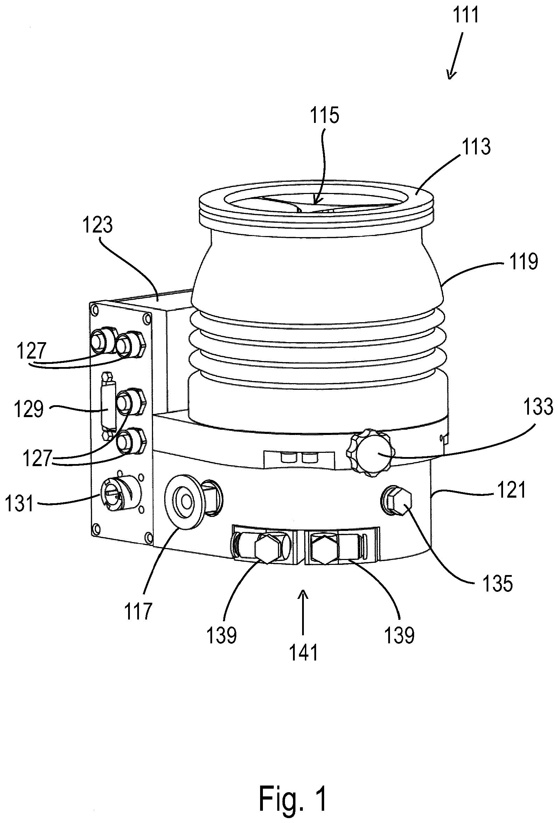

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

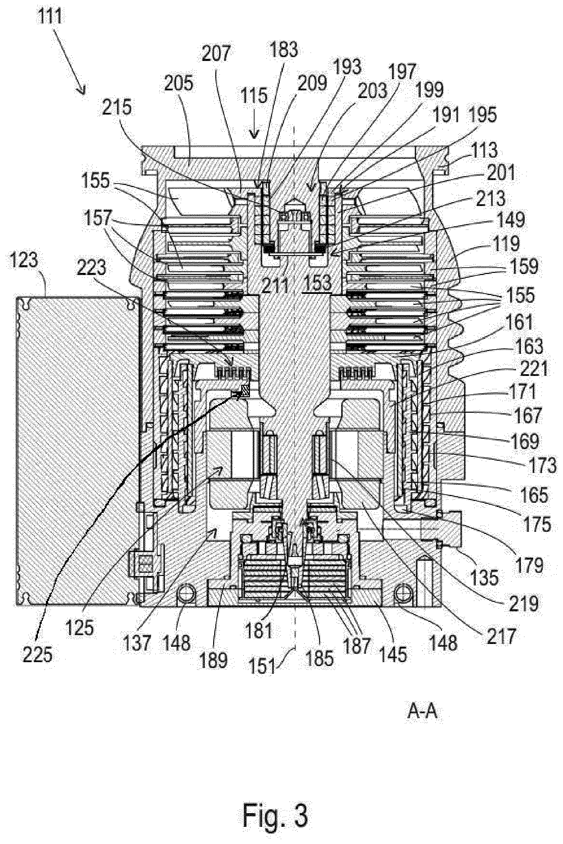

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

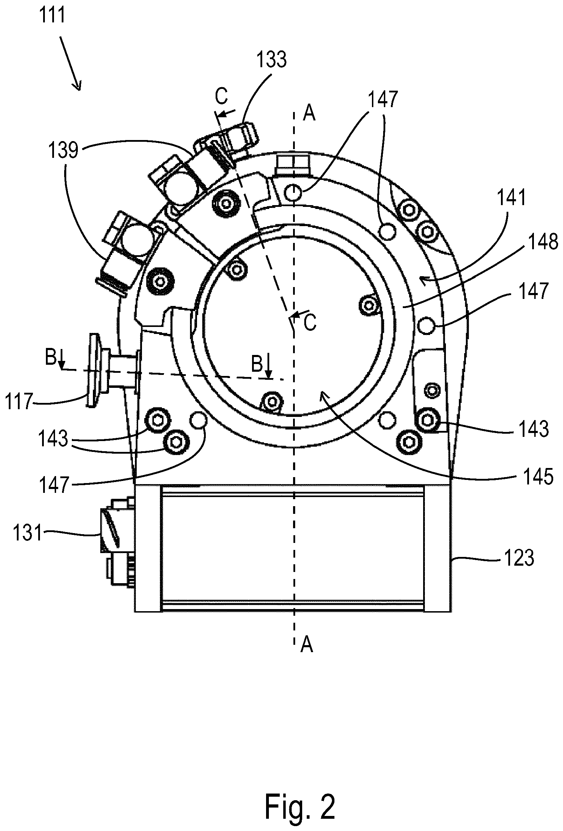

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

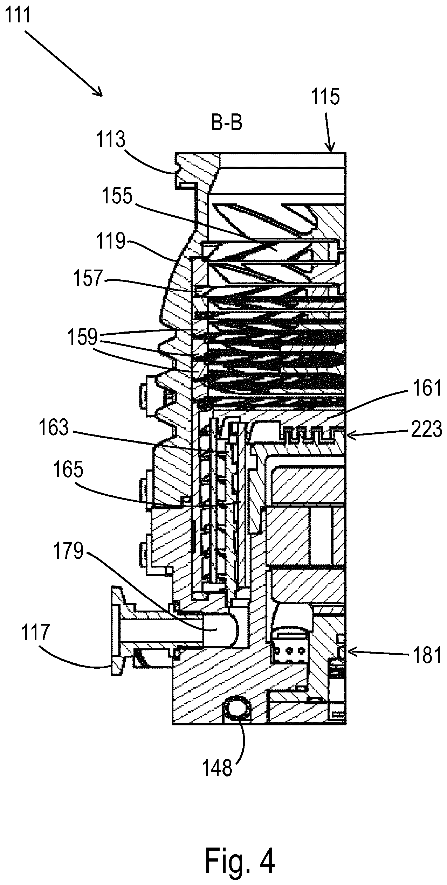

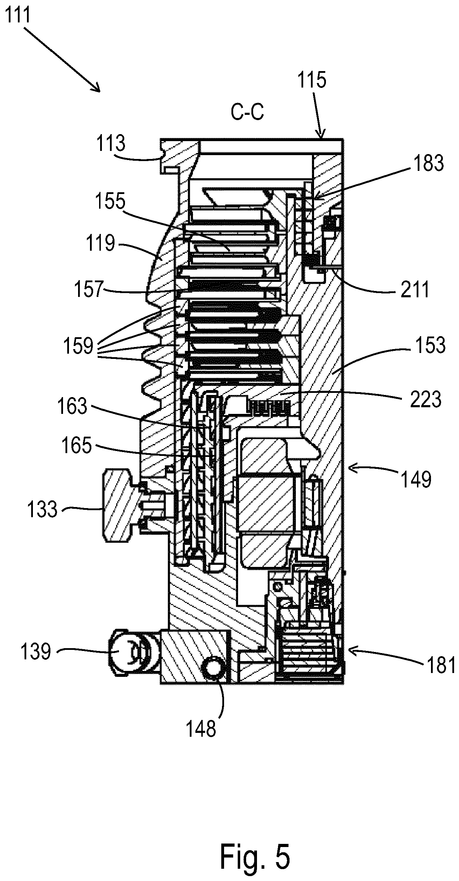

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Absto-ßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

Die Vakuumpumpe 111 ist mit einer nicht dargestellten Steuereinheit versehen oder verbunden, die dazu eingerichtet ist, ein erfindungsgemäßes Verfahren durchzuführen.

Die Vakuumpumpe 111 umfasst hierzu einen Temperatursensor 225, der in Fig. 3 dargestellt ist. Der Temperatursensor 225 ist als Infrarotsensor ausgebildet und misst die Oberflächentemperatur der Rotorwelle 153 in einem Bereich unmittelbar vor der Labyrinthdichtung 223.

Im Motorraum 137 fließt im ordnungsgemäßen Betrieb ein Sperrgasstrom vom Sperrgasanschluss 135 zur Labyrinthdichtung 223 und durch diese hindurch. Das Sperrgas weist eine kühlende Wirkung für den Rotor auf, insbesondere im Dichtungsbereich, wo eine relativ hohe Strömungsgeschwindigkeit des Sperrgases herrscht.

Ein nicht gesondert dargestelltes, steuerbares Sperrgasventil ist am Sperrgasanschluss 135 angeschlossen. Über das Sperrgasventil kann die beispielsweise im Elektronikgehäuse 123 angeordnete Steuereinheit den Sperrgasstrom steuern, beispielsweise ein- und ausschalten.

Durch das eingelassene Sperrgas erfährt der Rotor bzw. die Rotorwelle 153 also eine Abkühlung. Diese Temperaturveränderung ist durch die direkte Rotortemperaturmessung unmittelbar festzustellen und stellt eine gemessene Abweichung im Sinne der Erfindung dar. Erfindungsgemäß wird über die Temperaturabweichung festgestellt, ob der Gasfluss wie erwartet vorliegt. Bei einem Verstopfen oder sonstigem Ausbleiben des Gasstroms wird keine oder nur eine geringer als erwartete Temperaturabweichung festgestellt. Durch ein Ein- und Ausschalten des Gasstroms in geeigneten zeitlichen Abständen kann die Funktionsfähigkeit der Gasstromeinheit, hier des Sperrgasventils, regelmäßig überprüft, insbesondere überwacht, werden. Aufgrund der, insbesondere direkten, Rotortemperaturmessung können die Veränderungen sehr schnell festgestellt werden. Ein längeres Ausschalten ist also nicht notwendig, so dass die schützende Funktion des Sperrgases nicht zu lange aufgehoben wird. Umgekehrt sind bei sicherer Bereitstellung des Gasflusses auch Rückschlüsse auf den Zustand bzw. die Funktionsfähigkeit des Infrarotsensors gegeben. Werden unerwartete Werte (insbesondere ein Fehler) festgestellt, kann das Ermitteln der Zustandsinformation z.B. in geeigneten kurzen Abständen wiederholt werden, um den Fehler sicher zu detektieren und den Einfluss anderer Faktoren auf die ausbleibende Temperaturveränderung auszuschließen.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not-bzw. Fanglager
- 217: Motorstator
- 219: Zwischenraum
- 221: Wandung
- 223: Labyrinthdichtung
- 225: Temperatursensor

## Patentansprüche

1. Verfahren zum Ermitteln einer Zustandsinformation in einem Vakuumgerät (111) mit einer Gasstromeinheit, nämlich einem Ventil, zum Steuern und/oder Bereitstellen eines Gasstromes,
wobei das Verfahren die Schritte umfasst:
Messen eines ersten Temperaturmesswertes im Bereich des Gasstromes mittels eines Temperatursensors (225) in einem ersten Aktivitätszustand der Gasstromeinheit;
Versetzen der Gasstromeinheit in einen zweiten Aktivitätszustand, der einem geringeren oder einem höheren Gasstrom zugeordnet ist als der erste Aktivitätszustand;
Messen eines zweiten Temperaturmesswertes in dem Bereich des Gasstromes;
Ermitteln einer gemessenen Abweichung des zweiten Temperaturmesswertes von dem ersten Temperaturmesswert;
Vergleichen der gemessenen Abweichung mit einer erwarteten Abweichung;
Ermitteln der Zustandsinformation anhand des Vergleiches, wobei die Zustandsinformation eine Information über eine Funktionsfähigkeit der Gasstromeinheit und/oder des Temperatursensors umfasst.

2. Verfahren nach Anspruch 1,
wobei die erwartete Abweichung einen Erwartungsbereich umfasst.

3. Verfahren nach Anspruch 1 oder 2,
wobei auf einen ordnungsgemäßen Zustand geschlossen wird, wenn die gemessene Abweichung mit der erwarteten Abweichung übereinstimmt, und/oder wobei auf einen fehlerhaften Zustand geschlossen wird, wenn die gemessene Abweichung mit der erwarteten Abweichung nicht übereinstimmt.

4. Verfahren nach einem der vorstehenden Ansprüche,
wobei der Temperatursensor (225) entfernt von der Gasstromeinheit angeordnet ist.

5. Verfahren nach einem der vorstehenden Ansprüche,
wobei der Temperatursensor (225) zum Messen einer Oberflächentemperatur ausgebildet ist.

6. Verfahren nach einem der vorstehenden Ansprüche,
wobei der Temperatursensor (225) zum Messen einer Temperatur eines im Bereich des Gasstromes angeordneten Bauteiles (153) ausgebildet ist.

7. Verfahren nach Anspruch 6,
wobei das Bauteil (153) beweglich ist, wobei insbesondere das Bauteil ein rotierendes Bauteils ist, bevorzugt ein Rotor einer Vakuumpumpe.

8. Verfahren nach einem der vorstehenden Ansprüche,
wobei die Gasstromeinheit als Sperrgasventil ausgebildet ist.

9. Verfahren nach einem der vorstehenden Ansprüche,
wobei der zweite Aktivitätszustand einem geringeren Gasstrom zugeordnet ist als der erste Aktivitätszustand.

10. Verfahren nach einem der vorstehenden Ansprüche,
wobei der zweite Aktivitätszustand einem ausgeschalteten und/oder gesperrten Zustand des Gasstromes entspricht.

11. Verfahren nach einem der vorstehenden Ansprüche,
wobei die Zustandsinformation wiederholt ermittelt wird.

12. Verfahren nach einem der vorstehenden Ansprüche,
wobei der Gasstrom ein Sperrgas, ein Prozessgas oder ein Temperierungsgas umfasst.

13. Vakuumgerät, insbesondere Vakuumpumpe (111), umfassend:
eine Gasstromeinheit, nämlich ein Ventil, zum Steuern und/oder Bereitstellen eines Gasstromes,
einen Temperatursensor (225) zum Ermitteln einer Temperatur im Bereich des Gasstromes,
eine Steuereinheit, mittels derer die Gasstromeinheit steuerbar ist und eine Temperatur mittels des Temperatursensors (225) ermittelbar ist,
**dadurch gekennzeichnet, dass**
die Steuereinheit dazu eingerichtet ist, ein Verfahren nach einem der vorstehenden Ansprüche durchzuführen.

## Claims

1. A method of determining state information in a vacuum device (111) having a gas flow unit, namely a valve, for controlling and/or providing a gas flow, wherein the method comprises the steps:
measuring a first temperature measurement value in the region of the gas flow by means of a temperature sensor (225) in a first activity state of the gas flow unit;
setting the gas flow unit into a second activity state that is associated with a lower or a higher gas flow than the first activity state;
measuring a second temperature measurement value in the region of the gas flow;
determining a measured deviation of the second temperature measurement value from the first temperature measurement value;
comparing the measured deviation with an expected deviation; and
determining the state information based on the comparison, wherein the state information comprises information on an operability of the gas flow unit and/or of the temperature sensor.

2. A method in accordance with claim 1,
wherein the expected deviation comprises an expectation range.

3. A method in accordance with claim 1 or claim 2,
wherein a proper state is concluded when the measured deviation corresponds to the expected deviation, and/or wherein a defective state is concluded when the measured deviation does not correspond to the expected deviation.

4. A method in accordance with any one of the preceding claims,
wherein the temperature sensor (225) is arranged remotely from the gas flow unit.

5. A method in accordance with any one of the preceding claims,
wherein the temperature sensor (225) is configured to measure a surface temperature.

6. A method in accordance with any one of the preceding claims,
wherein the temperature sensor (225) is configured to measure a temperature of a component (153) arranged in the region of the gas flow.

7. A method in accordance with claim 6,
wherein the component (153) is movable, wherein in particular the component is a rotating component, preferably a rotor of a vacuum pump.

8. A method in accordance with any one of the preceding claims,
wherein the gas flow unit is configured as a sealing gas valve.

9. A method in accordance with any one of the preceding claims,
wherein the second activity state is associated with a lower gas flow than the first activity state.

10. A method in accordance with any one of the preceding claims,
wherein the second activity state corresponds to a switched-off and/or blocked state of the gas flow.

11. A method in accordance with any one of the preceding claims,
wherein the state information is determined repeatedly.

12. A method in accordance with any one of the preceding claims,
wherein the gas flow comprises a sealing gas, a process gas, or a temperature control gas.

13. A vacuum device, in particular a vacuum pump (111), comprising:
a gas flow unit, namely a valve, for controlling and/or providing a gas flow;
a temperature sensor (225) for determining a temperature in the region of the gas flow; and
a control unit by means of which the gas flow unit can be controlled and a temperature can be determined by means of the temperature sensor (225), **characterized in that**
the control unit is configured to perform a method in accordance with any one of the preceding claims.

## Revendications

1. Procédé pour déterminer une information d'état dans un appareil à vide (111) ayant une unité à flux de gaz, à savoir une valve, pour commander et/ou fournir un flux de gaz,
le procédé comprenant les étapes consistant à :
mesurer une première valeur de mesure de température au niveau du flux de gaz au moyen d'un capteur de température (225) dans un premier état d'activité de l'unité à flux de gaz ;
mettre l'unité à flux de gaz dans un second état d'activité associé à un flux de gaz inférieur ou supérieur à celui du premier état d'activité ;
mesurer une seconde valeur de mesure de température au niveau du flux de gaz ;
déterminer un écart mesuré de la seconde valeur de mesure de température par rapport à la première valeur de mesure de température ;
comparer l'écart mesuré avec un écart attendu ;
déterminer l'information d'état sur la base de la comparaison, l'information d'état incluant une information sur une aptitude au fonctionnement de l'unité à flux de gaz et/ou du capteur de température.

2. Procédé de la revendication 1,
dans lequel l'écart attendu inclut une plage attendue.

3. Procédé selon la revendication 1 ou 2,
dans lequel un état correct est conclu lorsque l'écart mesuré coïncide avec l'écart attendu, et/ou
un état défectueux est conclu lorsque l'écart mesuré ne coïncide pas avec l'écart attendu.

4. Procédé selon l'une des revendications précédentes,
dans lequel le capteur de température (225) est disposé à distance de l'unité à flux de gaz.

5. Procédé selon l'une des revendications précédentes,
dans lequel le capteur de température (225) est réalisé pour mesurer une température de surface.

6. Procédé selon l'une des revendications précédentes,
dans lequel le capteur de température (225) est réalisé pour mesurer une température d'un composant (153) disposé au niveau du flux de gaz.

7. Procédé selon la revendication 6,
dans lequel le composant (153) est mobile, et
en particulier, le composant est un composant rotatif, de préférence un rotor d'une pompe à vide.

8. Procédé selon l'une des revendications précédentes,
dans lequel l'unité à flux de gaz est réalisée sous forme de valve à gaz d'arrêt.

9. Procédé selon l'une des revendications précédentes,
dans lequel le second état d'activité est associé à un flux de gaz inférieur à celui du premier état d'activité.

10. Procédé selon l'une des revendications précédentes,
dans lequel le second état d'activité correspond à un état de coupure et/ou d'arrêt du flux de gaz.

11. Procédé selon l'une des revendications précédentes,
dans lequel l'information d'état est déterminée de manière répétée.

12. Procédé selon l'une des revendications précédentes,
dans lequel le flux de gaz comprend un gaz d'arrêt, un gaz de traitement ou un gaz de régulation de température.

13. Appareil à vide, en particulier pompe à vide (111), comprenant :
une unité à flux de gaz, à savoir une valve, pour commander et/ou fournir un flux de gaz,
un capteur de température (225) pour déterminer une température au niveau du flux de gaz,
une unité de commande permettant de commander l'unité à flux de gaz et de déterminer une température au moyen du capteur de température (225), **caractérisé en ce que**
l'unité de commande est configurée pour mettre en oeuvre un procédé selon l'une des revendications précédentes.
